# EUROPÄISCHE PATENTSCHRIFT

(11) **EP 2 785 998 B1**
(45) Veröffentlichungstag und Bekanntmachung des Hinweises auf die Patenterteilung: **10.05.2017**
(21) Anmeldenummer: 12790568.5
(22) Anmeldetag: 26.11.2012
(51) Int. Cl.: F02D 9/10, F16K 1/22, F02M 35/10

(54) **FRISCHLUFTZUFÜHREINRICHTUNG**
FRESH AIR SUPPLY DEVICE
SYSTÈME D'ADMISSION D'AIR FRAIS

(30) Priorität: 28.11.2011 DE 102011087234
(43) Veröffentlichungstag der Anmeldung: 08.10.2014
(73) Patentinhaber: Mahle International GmbH, 70376 Stuttgart (DE)
(72) Erfinder: BUCK, Simon, 72555 Metzingen (DE); MORGILLO, Ivano, 71543 Neuhütten (DE)
(74) Vertreter: BRP Renaud & Partner mbB Rechtsanwälte Patentanwälte Steuerberater
(86) Internationale Anmeldenummer: PCT/EP2012/073568
(87) Internationale Veröffentlichungsnummer: WO 2013/079428

(56) Entgegenhaltungen:
- EP-A2- 1 158 254
- EP-A2- 1 772 615
- WO-A1-01/16473
- DE-A1-102005 026 685
- JP-A- 7 167 140
- JP-A- 10 266 873
- US-A- 5 979 872
- US-A1- 2007 170 391

## Beschreibung

Die vorliegende Erfindung betrifft eine Frischluftzuführeinrichtung für eine Brennkraftmaschine.

Üblicherweise umfasst eine Frischluftzuführeinrichtung ein Gehäuse, das zur Montage an einem Zylinderkopf der Brennkraftmaschine vorbereitet ist. Ferner kann im Gehäuse eine Klappenanordnung angeordnet sein, die für Zylinder der Brennkraftmaschine Klappen zum Steuern eines Frischluftstroms zum jeweiligen Zylinder aufweist. Außerdem ist es grundsätzlich möglich, dass die Klappenanordnung eine gemeinsame Stellwelle umfasst, die mit den Klappen drehfest verbunden ist und die in Lagern der Klappenanordnung um eine Drehachse drehbar gelagert ist.

Aus der WO 2008/077681 A1 ist eine Lageranordnung zur Lagerung einer derartigen Stellwelle bekannt, die zweiteilig aufgebaut ist und ein Wellenlagerteil mit einer Lageröffnung umfasst, in der die Stellwelle drehbar gelagert ist. Ferner umfasst die Lageranordnung ein Gegenlagerteil mit einer Ausnehmung zur Aufnahme des Wellenlagerteils. Bei der bekannten Lageranordnung ist eine die Lageröffnung für die Stellwelle begrenzende Wandung im Wellenlagerteil durchbrochen und zumindest teilweise in die Ausnehmung im Gegenlagerteil einführbar. Weitere Lageranordnungen sind aus DE 10 2005 026 685 A1 und WO 01/16473 A1 bekannt.

Die vorliegende Erfindung beschäftigt sich mit dem Problem, für eine Frischluftzuführeinrichtung eine verbesserte oder zumindest eine andere Ausführungsform anzugeben, die sich insbesondere durch eine vereinfachte Herstellbarkeit auszeichnet.

Dieses Problem wird bei der vorliegenden Erfindung insbesondere durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, der jeweiligen Klappe eine Einfassung zuzuordnen, die den mit Hilfe der jeweiligen Klappe steuerbaren Strömungsquerschnitt umschließt. An der jeweiligen Einfassung sind beiderseits der zugehörigen Klappe zwei Lager angeordnet, die einander gegenüberliegen und die zur Lagerung der Stellwelle dienen. Des Weiteren sind die jeweilige Einfassung und die zugehörigen Lager in einer die Drehachse enthaltenden Teilungsebene geteilt, wobei diese Teilung derart durchgeführt ist, dass eine erste Einfassungshälfte zusammen mit zwei ersten Lagerhälften für die Montage der Klappenanordnung gegenüber einem Klappenrahmen beweglich ist, wobei der Klappenrahmen eine zweite Einfassungshälfte und zwei zweite Lagerhälften umfasst. Des Weiteren ist der jeweilige Klappenrahmen in das Gehäuse an einer dem Zylinderkopf zugewandten Seite eingesetzt. Durch die vorgeschlagene Teilung der Einfassung und der Lager vereinfacht sich die Montage der Klappenanordnung, da die Lager und die Einfassungen zwischen einem Offenzustand und einem Schließzustand verstellbar sind. Im Offenzustand lässt sich die Stellwelle mit den daran angebrachten Klappen in den jeweiligen Klappenrahmen einsetzen und in den zugehörigen zweiten Lagerhälften einfach positionieren, wobei die jeweilige Klappe in die jeweilige zweite Einfassungshälfte eingreift. Anschließend lassen sich die ersten Einfassungshälften mit den ersten Lagerhälften in den Schließzustand überführen, so dass die Lager dann die Stellwelle vollständig umgreifen und die Einfassungen, den jeweiligen Strömungsquerschnitt und die zugehörige Klappe vollständig umschließen. Anschließend lässt sich die Klappenanordnung im vormontierten Zustand in das Gehäuse einsetzen. Die Montage gestaltet sich dadurch besonders einfach, da insbesondere keine separaten Befestigungsmittel verwendet werden müssen.

Vorteilhaft ist eine Ausführungsform, bei welcher im Bereich der jeweiligen Klappe die erste Einfassungshälfte und die zwei ersten Lagerhälften eine erste Einheit bilden, die insbesondere als monolithisches Spritzgussteil konzipiert sein kann. Zusätzlich oder alternativ kann der zugehörige Klappenrahmen mit der zweiten Einfassungshälfte und den zwei zweiten Lagerhälften eine zweite Einheit bilden, die insbesondere als monolithisches Spritzgussteil konzipiert sein kann. Vorzugsweise sind die ersten Einheiten und die zweiten Einheiten vorgesehen, was die Montage erheblich vereinfacht.

Gemäß einer vorteilhaften Weiterbildung kann die erste Einheit über wenigstens ein Filmscharnier mit der zweiten Einheit verbunden sein, wobei das jeweilige Filmscharnier eine Schwenkachse definiert, um welche die erste Einheit für die Montage der Klappenanordnung relativ zur zweiten Einheit verschwenkbar ist. Durch die Verwendung wenigstens eines Filmscharniers, das die beiden Einheiten miteinander verbindet, lassen sich die beiden Einheiten zusammen mit dem jeweiligen Filmscharnier als monolithisches Spritzgussteil konzipieren. Mit anderen Worten, die beiden Einheiten sind zusammen mit dem jeweiligen Filmscharnier aus einem Stück durch Spritzgießen hergestellt, vorzugsweise aus Kunststoff.

Zweckmäßig sind die beiden Einheiten über zwei derartige Filmscharniere gelenkig miteinander verbunden, wobei das jeweilige Filmscharnier jeweils an einem der Lager ausgebildet ist. Somit sind insbesondere die beiden Lagerhälften jeweils über ein solches Filmscharnier gelenkig miteinander verbunden. Besonders vorteilhaft ist dabei eine Ausführungsform, bei welcher die Filmscharniere am jeweiligen Lager an einem dem Inneren des Gehäuses zugewandten Ende angeordnet sind. In diesem Fall lässt sich die Klappenanordnung besonders einfach so konzipieren, dass die relativ zueinander beweglichen Einheiten beim Einsetzen des jeweiligen Klappenrahmens in das Gehäuse zwangsläufig ihren Schließzustand einnehmen müssen, um überhaupt in das Gehäuse einsetzbar zu sein. Ferner kann die Klappenanordnung hierdurch auch so konzipiert werden, dass die relativ zueinander beweglichen Einheiten relativ zueinander nicht mehr beweglich sind, sobald der Klappenrahmen im Schließzustand in das Gehäuse eingesetzt ist. Durch diese Maßnahme lässt sich somit eine zuverlässige Montage vergleichsweise einfach realisieren.

Gemäß einer anderen vorteilhaften Ausführungsform kann die jeweilige erste Einheit über Rastmittel an der jeweiligen zweiten Einheit befestigt sein. Derartige Rastmittel ermöglichen eine Fixierung der beiden Einheiten aneinander im Schließzustand, ohne dass hierfür separate Befestigungsmittel erforderlich sind. Hierdurch vereinfacht sich eine preiswerte Montage.

Gemäß einer vorteilhaften Weiterbildung können die Rastmittel an den Lagerhälften integral ausgeformt sein. Auch diese Maßnahme reduziert die Montagekosten, da die Rastmittel nach dem Herstellen der Einheiten bereits vorhanden sind und nicht montiert werden müssen.

Zweckmäßig ist eine weitere Ausführungsform, bei welcher die Rastmittel beim jeweiligen Lager beiderseits der Stellwelle vorgesehen sind, wodurch die jeweilige Lagerung eine hohe Stabilität besitzt. Insbesondere kann dadurch auch das vorstehend genannte Filmscharnier von den Lagerkräften entkoppelt werden. Zweckmäßig ist somit eine Ausführungsform, bei welcher die beiden Einheiten des jeweiligen Klappenrahmens ausschließlich über die Lagerhälften miteinander verrastet bzw. aneinander festgelegt werden.

Entsprechend einer anderen Ausführungsform kann die Klappenanordnung für jede Klappe einen separaten Klappenrahmen aufweisen. Der jeweilige Klappenrahmen baut vergleichsweise klein und lässt sich dementsprechend vergleichsweise preiswert herstellen, insbesondere mittels Spritzgusstechnik aus Kunststoff. Da insgesamt eine größere Stückzahl für die Klappenrahmen benötigt wird, lassen sich insgesamt auch die Herstellungskosten für die Klappenanordnungen reduzieren. Eine Frischluftzuführeinrichtung, die beispielsweise drei Zylindern der Brennkraftmaschine zugeordnet ist, umfasst dann eine Klappenanordnung, die drei derartige Klappenrahmen aufweist.

Bei einer anderen Ausführungsform kann der jeweilige Klappenrahmen zwei einander, beiderseits der Teilungsebene gegenüberliegende Führungswände aufweisen, die sich an einer Innenwand des Gehäuses senkrecht zur Teilungsebene abstützen. Die Führungswände ermöglichen ein geführtes Einsetzen des jeweiligen Klappenrahmens in das Gehäuse und vereinfachen dadurch die Montage. Insbesondere reduzieren die Führungswände die Gefahr eines Verkippens des Klappenrahmens innerhalb des Gehäuses. Außerdem bewirken die Klappenrahmen mittels der Führungswände eine Aussteifung des Gehäuses.

Entsprechend einer vorteilhaften Weiterbildung können die Führungswände über Stege an einem Boden des Klappenrahmens abgestützt sein. Hierdurch kann die Steifigkeit der Führungswände und somit deren Führungsfunktion und Abstützungswirkung signifikant verbessert werden.

Entsprechend einer anderen vorteilhaften Ausführungsform kann der jeweilige Klappenrahmen je Klappe eine Durchlassöffnung aufweisen, die einen ungesteuerten Strömungsquerschnitt besitzt, der parallel zu dem mit der jeweiligen Klappe gesteuerten Strömungsquerschnitt demselben Zylinder zugeordnet ist. Mit anderen Worten, bei einer derartigen Ausführungsform erfolgt die Frischluftzuführung zum jeweiligen Zylinder zum einen durch die ungesteuerte, also permanent offene Durchlassöffnung und zum anderen durch die mit Hilfe der jeweiligen Klappe gesteuerte Einfassung. Somit kann insbesondere der jeweilige, der Einfassung zugeordnete Strömungsquerschnitt bedarfsabhängig zugeschaltet oder weggeschaltet werden. Gemäß einer zweckmäßigen Weiterbildung kann der ungesteuerte Strömungsquerschnitt der jeweiligen Durchlassöffnung als Rechteckquerschnitt konzipiert sein, während der jeweilige gesteuerte Strömungsquerschnitt der jeweiligen Einfassung als Kreisquerschnitt konzipiert sein kann. Durch diese Maßnahme kann z.B. eine vorbestimmte Einströmkonfiguration in den jeweiligen Zylinder realisiert werden.

Bei einer anderen vorteilhaften Ausführungsform kann das Gehäuse an seiner dem Zylinderkopf zugewandten Seite entlang einer Innenwand des Gehäuses zumindest eine Stufe aufweisen, in die ein Rand des jeweiligen Klappenrahmens vorsteht, derart, dass durch ein Befestigen des Gehäuses am Zylinderkopf auch der jeweilige Klappenrahmen am Zylinderkopf festgelegt ist. Insbesondere kann der Klappenrahmen durch das Festlegen des Gehäuses am Zylinderkopf zwischen Gehäuse und Zylinderkopf eingespannt werden. Auf eine separate Fixierung des Klappenrahmens am Gehäuse kann dabei verzichtet werden, was die Montage vereinfacht.

Gemäß einer vorteilhaften Weiterbildung kann der Rand des jeweiligen Klappenrahmens lokal an mehreren, entlang des Rands verteilten Stellen oder global in Richtung Zylinderkopf über die dem Zylinderkopf zugewandte Seite des Gehäuses vorstehen. Hierdurch wird erreicht, dass der jeweilige Klappenrahmen beim Festlegen des Gehäuses am Zylinderkopf definiert zwischen Gehäuse und Zylinderkopf eingespannt wird, um beispielsweise eine gewünschte Andruckkraft zu realisieren, die insbesondere Relativbewegungen des jeweiligen Klappenrahmens gegenüber dem Gehäuse und gegenüber dem Zylinderkopf verhindert.

Bei einer anderen vorteilhaften Ausführungsform kann das Gehäuse für den jeweiligen Klappenrahmen zumindest ein Positionierelement zur Ausrichtung des jeweiligen Klappenrahmens parallel zur Drehachse relativ zum Gehäuse aufweisen, die an einer Innenwand des Gehäuses angeordnet sind. Mit Hilfe derartiger Positionierelemente vereinfacht sich das Einsetzen und somit das Montieren des Klappenrahmens, da die Positionierelemente das Auffinden einer vorbestimmten Relativlage zwischen den Klappenrahmen und dem Gehäuse vereinfachen.

Entsprechend einer besonders vorteilhaften Weiterbildung kann dabei der jeweilige Klappenrahmen ein zum jeweiligen Positionierelement komplementäres Gegenpositionierelement aufweisen, das zum Ausrichten des Klappenrahmens relativ zum Gehäuse mit dem jeweiligen Positionierelement zusammenwirkt. Insbesondere können Positionierelement und Gegenpositionierelement hierzu formschlüssig ineinander eingreifen, beispielsweise nach Art einer Nut-Feder-Kupplung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Ansicht einer Frischluftzuführeinrichtung im Querschnitt,
- Fig. 2: eine isometrische Ansicht einer Klappenanordnung der Frischluftzuführeinrichtung in einem Schließzustand,
- Fig. 3: eine isometrische Teilansicht der Klappenanordnung in einem Offenzustand,
- Fig. 4: eine isometrische Ansicht von oben eines Klappenrahmens im Schließzustand,
- Fig. 5: eine isometrische Ansicht von oben des Klappenrahmens im Offenzustand,
- Fig. 6: eine isometrische Ansicht von unten des Klappenrahmens im Schließzustand,
- Fig. 7: eine isometrische Teilansicht eines Gehäuses der Frischluftzuführeinrichtung.

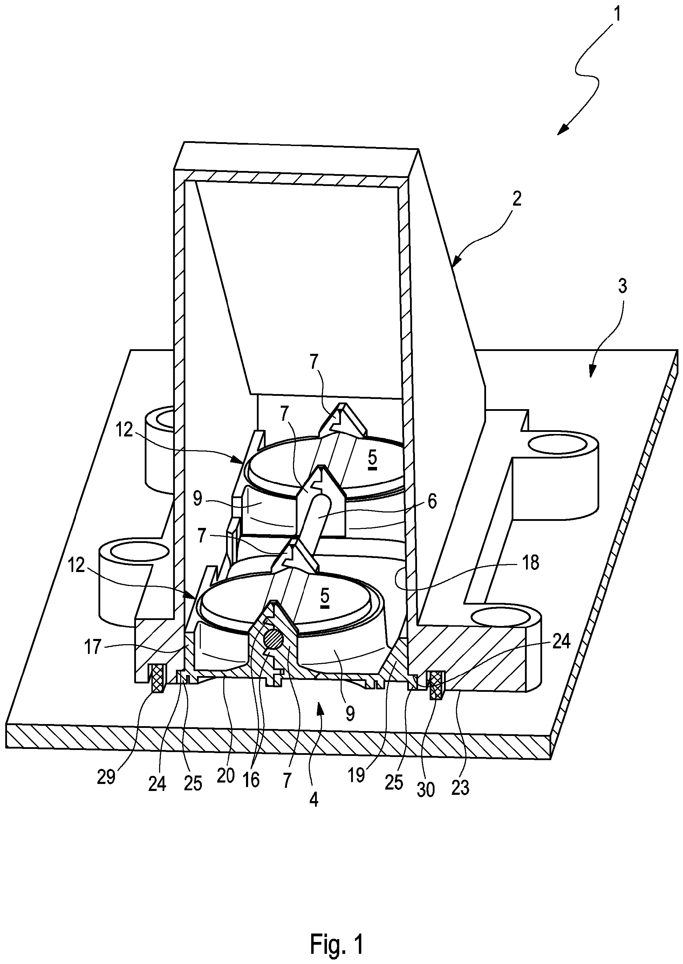

Entsprechend Fig. 1 umfasst eine nur teilweise dargestellte Frischluftzuführeinrichtung 1, mit deren Hilfe Zylindern einer Brennkraftmaschine Frischluft zugeführt werden kann, ein Gehäuse 2, das für eine Montage an einem hier vereinfacht angedeuteten Zylinderkopf 3 der Brennkraftmaschine vorbereitet ist. Ferner umfasst die Frischluftzuführeinrichtung 1 eine Klappenanordnung 4, die im Gehäuse 2 angeordnet ist und die für die Zylinder der Brennkraftmaschine Klappen 5 aufweist, mit denen ein Frischluftstrom zum jeweiligen Zylinder gesteuert werden kann.

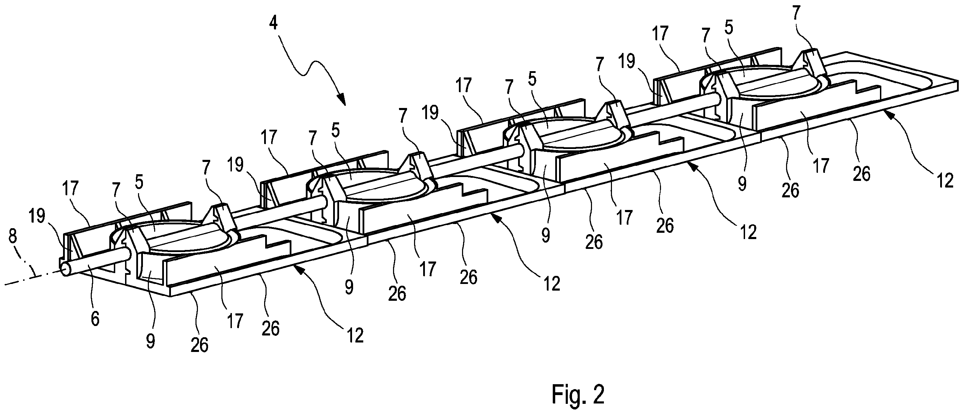

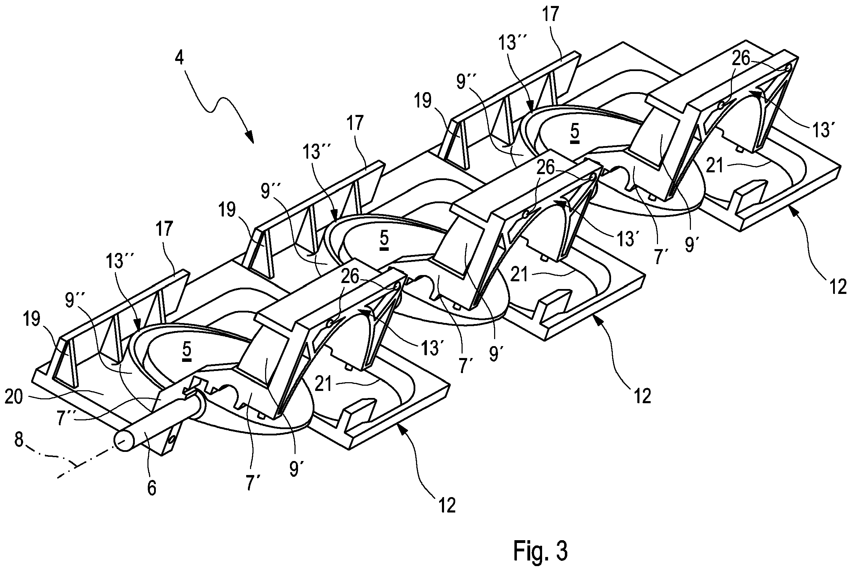

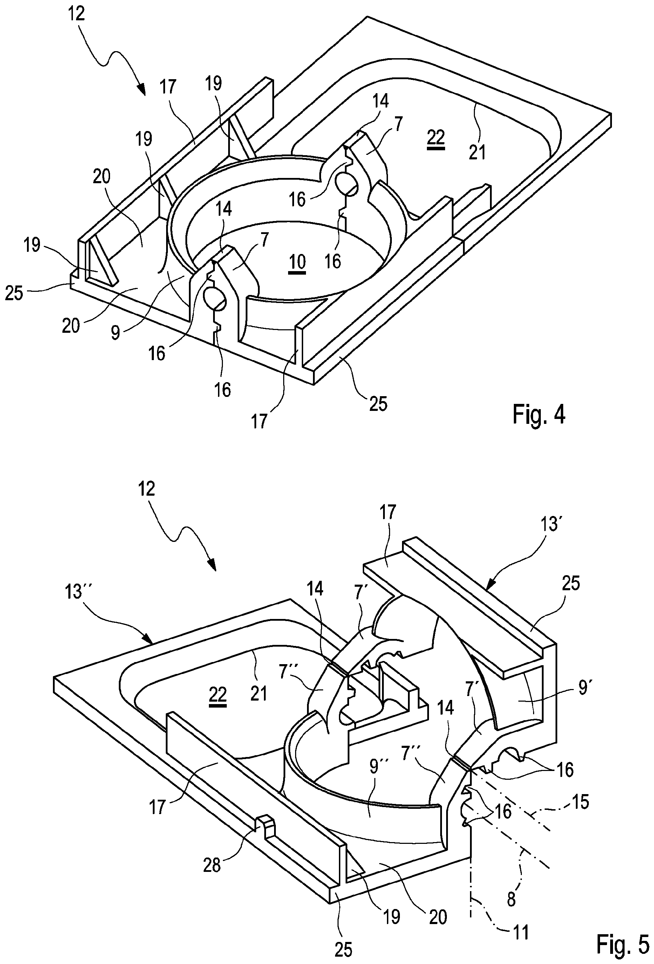

Entsprechend den Figuren 1-3 umfasst die jeweilige Klappenanordnung 4 eine gemeinsame Stellwelle 6, mit der alle Klappen 5 der Klappenanordnung 4 drehfest verbunden sind. Die Stellwelle 6 ist in Lagern 7 der Klappenanordnung 4 um eine Drehachse 8 drehbar gelagert. Des Weiteren besitzt die Klappenanordnung 4 je Klappe 5 eine Einfassung 9, die einen Strömungsquerschnitt 10 einfasst, der mit Hilfe der jeweiligen Klappe 5 steuerbar ist. An der jeweiligen Einfassung 9 sind jeweils zwei Lager 7 einander diametral gegenüberliegend angeordnet, so dass sie beiderseits der zugehörigen Klappe 5 angeordnet sind. Außerdem ist die jeweilige Einfassung 9 und sind die beiden zugehörigen Lager 7 in einer in Fig. 5 durch eine strichpunktierte Linie angedeuteten Teilungsebene 11 geteilt, in welcher die Drehachse 8 liegt. Die Teilungsebene 11 ist dabei so gelegt, dass eine erste Einfassungshälfte 9' gemeinsam mit zwei ersten Lagerhälften 7' für die Montage der Klappenanordnung 4 gegenüber einem Klappenrahmen 12 beweglich ist. Dieser Klappenrahmen 12 umfasst dabei eine zweite Einfassungshälfte 9" und zwei zweite Lagerhälften 7". Der Klappenrahmen 12 ist somit zwischen einem in den Figuren 3 und 5 wiedergegebenen Offenzustand und einem in den Figuren 2 und 4 wiedergegebenen Schließzustand verstellbar. Im Offenzustand ist die Stellwelle 6 gemeinsam mit den daran angeordneten, insbesondere angespritzten Klappen 5 in den jeweiligen Klappenrahmen 12 einsetzbar, um die Klappenanordnung 4 zu montieren. Im Schließzustand ist die Stellwelle 6 ordnungsgemäß in dem jeweiligen Klappenrahmen 12 positioniert und in den zugehörigen Lagern 7 drehbar gelagert. Im Schließzustand ist dann der jeweilige Klappenrahmen 12 in das Gehäuse 2 einsetzbar. Dementsprechend zeigen die gemäß Figur 1 in das Gehäuse 2 eingesetzten Klappenrahmen 12 jeweils ihren Schließzustand.

Im Bereich der jeweiligen Klappe 5 bilden die erste Einfassungshälfte 9' und die beiden ersten Lagerhälften 7' eine erste Einheit 13'. Weiter bildet der zugehörige Klappenrahmen 12 mit der zweiten Einfassungshälfte 9" und den beiden zweiten Lagerhälften 7" eine zweite Einheit 13". Die beiden Einheiten 13', 13" sind im gezeigten Beispiel über zwei Filmscharniere 14 um eine Schwenkachse 15 relativ zueinander verschwenkbar, um den jeweiligen Klappenrahmen 12 bzw. um die Klappenanordnung 4 zwischen der Offenstellung und der Schließstellung verstellen zu können. Sofern die beiden Einheiten 13', 13" wie im gezeigten Beispiel über die Filmscharniere 14 miteinander verbunden sind, bilden die beiden Einheiten 13', 13" mit den Filmscharnieren 14 ein einstückiges oder einteiliges Bauteil, nämlich ein monolithisches Spritzgussteil aus Kunststoff.

Die beiden Einheiten 13', 13" sind zweckmäßig über Rastmittel 16 miteinander verrastet bzw. aneinander befestigt. Die Rastmittel 16 sind zweckmäßig an den Lagerhälften 7', 7" integral ausgeformt, wobei vorzugsweise an jedem Lager 7 wenigstens zwei derartige Rastmittel 16 vorgesehen sind, die beiderseits der Stellwelle 6 angeordnet sind.

Vorzugsweise besteht die Klappenanordnung 4 aus mehreren Klappenrahmen 12, wobei vorzugsweise für jede Klappe 5 ein separater Klappenrahmen 12 vorgesehen ist. Die in Fig. 2 gezeigte Klappenanordnung 4, die insgesamt vier Klappen 5 umfasst, besteht somit aus vier einzelnen Klappenrahmen 12.

Der jeweiligen Klappenrahmen 12 kann dabei zwei einander beiderseits der Teilungsebene 11 gegenüberliegende Führungswände 17 aufweisen, die im montierten Zustand jeweils an einer Innenwand 18 des Gehäuses 2 senkrecht zur Teilungsebene 11 abgestützt sind. Diese Führungswände 17 können nun ihrerseits über Stege 19 an einem Boden 20 des jeweiligen Klappenrahmens 12 abgestützt sein, um so die Führungswände 17 zu stabilisieren.

Bei der hier gezeigten Ausführungsform umfasst der jeweilige Klappenrahmen 12 je Klappe 5 außerdem eine Durchlassöffnung 21, die einen Strömungsquerschnitt 22 besitzt, dem keine Klappe 5 zugeordnet ist, so dass der Strömungsquerschnitt 22 der Durchlassöffnung 21 ungesteuert ist. Ebenfalls ist der ungesteuert Strömungsquerschnitt 22 parallel zu dem mit Hilfe der jeweiligen Klappe 5 gesteuerten Strömungsquerschnitt 10 der jeweiligen Einfassung 9 demselben Zylinder zugeordnet. Im Beispiel ist der ungesteuerte Strömungsquerschnitt 22 der Durchlassöffnung 21 als Rechteckquerschnitt ausgestaltet, während der gesteuerte Strömungsquerschnitt 10 der Einfassung 9 als Kreisquerschnitt konzipiert ist.

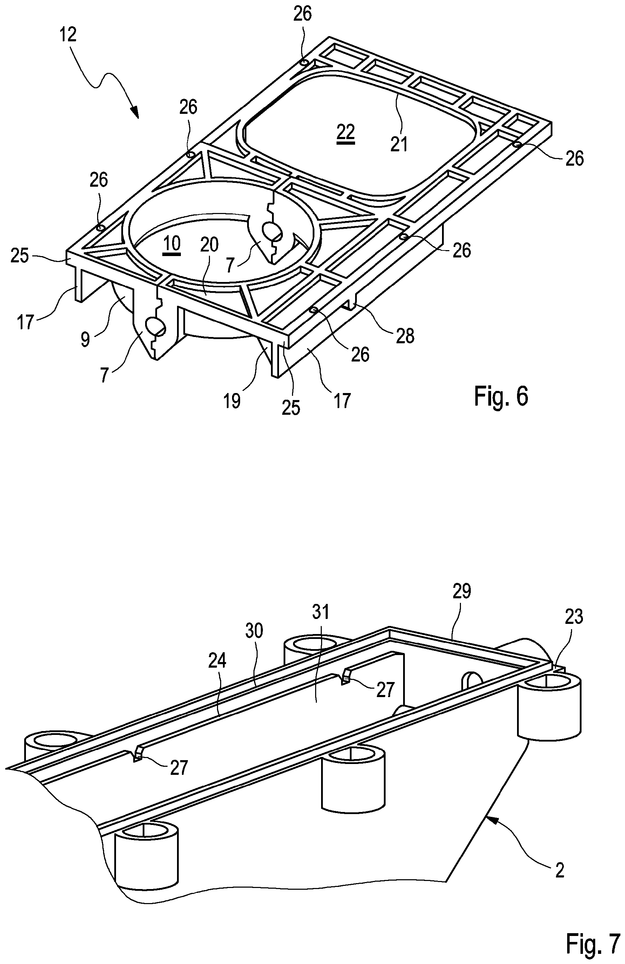

Das Gehäuse 2 besitzt gemäß Fig. 1 an seiner dem Zylinderkopf 3 zugewandten Seite 23 wenigstens eine Stufe 24, die entlang der Innenseite 18 angeordnet ist und vorzugsweise geschlossen umlaufend gestaltet ist. In diese Stufe 24 steht ein Rand 25 des jeweiligen Klappenrahmens 12 vor. Hierdurch kann durch das Befestigen des Gehäuses 2 am Zylinderkopf 3 gleichzeitig auch der jeweilige Klappenrahmen 12 am Zylinderkopf 3 festgelegt werden. Entsprechend einer vorteilhaften Ausführungsform kann besagter Rand 25 des jeweiligen Klappenrahmens 12 in Richtung Zylinderkopf 3 über die dem Zylinderkopf 3 zugewandte Seite 23 des Gehäuses 2 vorstehen. Gemäß Fig. 6 können hierzu lokal an mehreren, entlang des Rands 25 verteilten Stellen mehrere Vorsprünge 26 am jeweiligen Klappenrahmen 12 ausgebildet sein, über die der jeweilige Klappenrahmen 12 beim Montieren des Gehäuses 2 mit dem Zylinderkopf 3 in Kontakt steht und dadurch zwischen dem Gehäuse 2 und dem Zylinderkopf 3 verspannt wird. Anstelle derartiger lokaler Vorsprünge 26 kann der Rand 25 des Klappenrahmens insgesamt, also global über die dem Zylinderkopf 3 zugewandte Seite 23 des Gehäuses 2 vorstehen.

Entsprechend Fig. 7 kann das Gehäuse 2 für den jeweiligen Klappenrahmen 12 jeweils wenigstens ein Positionierelement 27 aufweisen, mit dessen Hilfe es möglich ist, beim Einsetzen des jeweiligen Klappenrahmens 12 diesen parallel zur Drehachse 8 relativ zum Gehäuse 2 auszurichten. Die Positionierelemente 27 sind hierzu an der Innenwand 18 des Gehäuses 2 angeordnet. Vorzugsweise sind die Positionierelemente 27 mittig zur jeweiligen Klappenposition 5 bzw. mittig zur zugehörigen Einfassung 9 positioniert. Komplementär zum jeweiligen Positionierelement 27 kann der jeweilige Klappenrahmen 12 gemäß Fig. 5 zumindest ein Gegenpositionierelement 28 aufweisen, das komplementär zum Positionierelement 27 geformt ist, wobei insbesondere ein formschlüssiges Eingreifen des gehäuseseitigen Positionierelements 27 in das klappenrahmenseitige Gegenpositionierelement 28 stattfindet, wenn der jeweilige Klappenrahmen 12 seine vorgesehene Position relativ zum Gehäuse 2 gefunden hat.

Gemäß den Fig. 1 und 7 ist das Gehäuse 2 an seiner dem Zylinderkopf 3 zugewandten Seite 23 außerdem mit einer Dichtung 29 ausgestattet, die im montierten Zustand axial dichtend am Zylinderkopf 3 zur Anlage kommt. Zur Aufnahme der Dichtung 29 weist das Gehäuse 2 eine Aufnahmenut 30 auf, die an besagter Seite 23 in das Gehäuse 2 eingearbeitet ist. Die Dichtung 29 bzw. die Aufnahmenut 30 umschließt eine Öffnung 31 des Gehäuses 2, die dem Zylinderkopf 3 zugewandt ist und in die die Klappenanordnung 4 bzw. die Klappenrahmen 12 eingesetzt ist/sind.

## Patentansprüche

1. Frischluftzuführeinrichtung für eine Brennkraftmaschine,
- mit einem Gehäuse (2), das zur Montage an einem Zylinderkopf (3) der Brennkraftmaschine vorbereitet ist,
- mit einer im Gehäuse (2) angeordneten Klappenanordnung (4), die für Zylinder der Brennkraftmaschine Klappen (5) zum Steuern eines Frischluftstroms zum jeweiligen Zylinder aufweist,
- wobei die Klappenanordnung (4) eine gemeinsame Stellwelle (6) umfasst, die mit den Klappen (5) drehfest verbunden ist und die in Lagern (7) der Klappenanordnung (4) um eine Drehachse (8) drehbar gelagert ist,
- wobei die Klappenanordnung (4) je Klappe (5) eine Einfassung (9) aufweist, die einen mit der jeweiligen Klappe (5) steuerbaren Strömungsquerschnitt (10) einfasst,
- wobei an der jeweiligen Einfassung (9) beiderseits der zugehörigen Klappe (5) zwei solche Lager (7) einander gegenüberliegen,
**dadurch gekennzeichnet,**
- **dass** die Klappenanordnung (4) einen bezüglich des Gehäuses (2) separaten Klappenrahmen (12) aufweist, der die Lager (7) und die Einfassungen (9) aufweist, an dem die Stellwelle (6) mit den Klappen (5) gelagert ist und der an einer dem Zylinderkopf (3) zugewandten Seite (23) in das Gehäuse (2) eingesetzt ist,
- **dass** die jeweilige Einfassung (9) und die beiden zugehörigen Lager (7) in einer die Drehachse (8) enthaltenden Teilungsebene (11) geteilt sind, derart, dass eine erste Einfassungshälfte (9') zusammen mit zwei ersten Lagerhälften (7') für die Montage der Klappenanordnung (4) gegenüber dem Klappenrahmen (12) beweglich ist, der eine zweite Einfassungshälfte (9") und zwei zweite Lagerhälften (7") umfasst.

2. Frischluftzuführeinrichtung nach Anspruch 1,
**dadurch gekennzeichnet,**
**dass** im Bereich der jeweiligen Klappe (5) die erste Einfassungshälfte (9') und die zwei ersten Lagerhälfte (7') eine erste Einheit (13') bilden, wobei der zugehörige Klappenrahmen (12) mit der zweiten Einfassungshälfte (9") und den zwei zweiten Lagerhälften (7") eine zweite Einheit (13") bildet.

3. Frischluftzuführeinrichtung nach Anspruch 2
**dadurch gekennzeichnet,**
**dass** die erste Einheit (13') über wenigstens ein Filmscharnier (14) mit der zweiten Einheit (13") verbunden ist, das eine Schwenkachse (15) definiert, um welche die erste Einheit (13') für die Montage der Klappenanordnung (4) relativ zur zweiten Einheit (13") verschwenkbar ist.

4. Frischluftzuführeinrichtung nach Anspruch 2 oder 3,
**dadurch gekennzeichnet,**
**dass** die jeweilige erste Einheit (13') über Rastmittel (16) an der jeweiligen zweiten Einheit (13") befestigt ist.

5. Frischluftzuführeinrichtung nach Anspruch 4,
**dadurch gekennzeichnet,**
**dass** die Rastmittel (16) an den Lagerhälften (7', 7") integral ausgeformt sind.

6. Frischluftzuführeinrichtung nach einem der Ansprüche 1 bis 5,
**dadurch gekennzeichnet,**
**dass** die Klappenanordnung (4) für jede Klappe (5) einen separaten Klappenrahmen (12) aufweist.

7. Frischluftzuführeinrichtung nach einem der Ansprüche 1 bis 6,
**dadurch gekennzeichnet,**
**dass** der jeweilige Klappenrahmen (12) zwei einander, beiderseits der Teilungsebene (11) gegenüberliegende Führungswände (17) aufweist, die sich an einer Innenwand (18) des Gehäuses (2) senkrecht zur Teilungsebene (11) abstützen.

8. Frischluftzuführeinrichtung nach Anspruch 7,
**dadurch gekennzeichnet,**
**dass** die Führungswände (17) über Stege (19) an einem Boden (20) des Klappenrahmens (12) abgestützt sind.

9. Frischluftzuführeinrichtung nach einem der Ansprüche 1 bis 8,
**dadurch gekennzeichnet,**
**dass** der jeweilige Klappenrahmen (12) je Klappe (5) eine Durchlassöffnung (21) aufweist, die einen ungesteuerten Strömungsquerschnitt (22) besitzt, der parallel zu dem mit der jeweiligen Klappe (5) gesteuerten Strömungsquerschnitt (10) demselben Zylinder zugeordnet ist.

10. Frischluftzuführeinrichtung nach einem der Ansprüche 1 bis 9,
**dadurch gekennzeichnet,**
**dass** das Gehäuse (2) an seiner dem Zylinderkopf (3) zugewandten Seite (23) entlang einer Innenwand (18) des Gehäuses (2) zumindest eine Stufe (24) aufweist, in die ein Rand (25) des jeweiligen Klappenrahmens (12) vorsteht, so dass durch ein Befestigen des Gehäuses (2) am Zylinderkopf (3) auch der jeweilige Klappenrahmen (12) am Zylinderkopf (3) festgelegt ist.

11. Frischluftzuführeinrichtung nach Anspruch 10,
**dadurch gekennzeichnet,**
**dass** der Rand (25) des jeweiligen Klappenrahmens (12) lokal an mehreren, entlang des Rands (25) verteilten Stellen (26) oder global in Richtung Zylinderkopf (3) über die von dem Zylinderkopf (3) zugewandte Seite (23) des Gehäuses (2) vorsteht.

12. Frischluftzuführeinrichtung nach einem der Ansprüche 1 bis 11,
**dadurch gekennzeichnet,**
**dass** das Gehäuse (2) für den jeweiligen Klappenrahmen (12) wenigstens ein Positionierelement (27) zur Ausrichtung des jeweiligen Klappenrahmens (12) parallel zur Drehachse (8) relativ zum Gehäuse (2) aufweist, das an einer Innenwand (18) des Gehäuses (2) angeordnet ist.

13. Frischluftzuführeinrichtung nach Anspruch 12,
**dadurch gekennzeichnet,**
**dass** der jeweilige Klappenrahmen (12) wenigstens ein Gegenpositionierelement (28) aufweist, das komplementär zum jeweiligen Positionierelement (27) ausgestaltet ist und das zum Ausrichten des jeweiligen Klappenrahmens (12) relativ zum Gehäuse (2) mit dem jeweiligen Positionierelement (27) zusammenwirkt.

## Claims

1. Fresh air supply device for an internal combustion engine,
- comprising a housing (2), prepared for installation on a cylinder head (3) of the internal combustion engine,
- comprising a flap arrangement (4) arranged in the housing (2), having flaps (5) for cylinders of the internal combustion engine, to control a flow of fresh air to the respective cylinder,
- wherein the flap arrangement (4) comprises a common actuating shaft (6) which is connected to the flaps (5) for conjoint rotation therewith and is mounted in bearings (7) of the flap arrangement (4) rotatably about an axis of rotation (8),
- wherein for each flap (5), the flap arrangement (4) comprises an enclosure (9) enclosing a flow cross-section (10) that can be controlled by the respective flap (5),
- wherein two such bearings (7), one on each side of the flap (5), are arranged opposite one another on each enclosure (9),
**characterised in that**
- the flap arrangement (4) comprises a flap frame (12) that is separate with respect to the housing (2), which comprises the bearings (7) and the enclosures (9), on which the actuating shaft (6) is mounted with the flaps (5) and which is inserted in the housing (2) on a side (23) facing the cylinder head (3),
- the respective enclosure and the two associated bearings (7) are divided in a division plane (11) containing the axis of rotation (8) in such a manner that a first half-enclosure (9') together with two first half-bearings (7') can be moved, for the assembly of the flap arrangement (4), relative to a flap frame (12) that comprises a second half-enclosure (9") and two second half-bearings (7").

2. Fresh air supply device according to claim 1,
**characterised in that**
in the region of the respective flap (5), the first half-enclosure (9') and the two first half bearings (7') form a first entity (13'), wherein the associated flap frame (12) forms a second entity (13") with the second half-enclosure (9") and the two second half-bearings (7").

3. Fresh air supply device according to claim 2,
**characterised in that**
the first entity (13') is connected to the second entity (13") via at least one film hinge (14) which defines a pivot axis (15) around which the first entity (13') is pivotable relative to the second entity (13") for the assembly of the flap arrangement (4).

4. Fresh air supply device according to claim 2 or 3,
**characterised in that**
each first entity (13') is attached to the respective second entity (13") via latching means (16).

5. Fresh air supply device according to claim 4,
**characterised in that**
the latching means (16) are integrally formed on the half-bearings (7', 7").

6. Fresh air supply device according to one of claims 1 to 5,
**characterised in that**
the flap arrangement (4) comprises a separate flap frame (12) for each flap (5).

7. Fresh air supply device according to one of claims 1 to 6,
**characterised in that**
each flap frame (12) comprises two opposite guide walls (17) on either side of the dividing plane (11), which are supported perpendicular to the dividing plane (11) on an inner wall (18) of the housing (2).

8. Fresh air supply device according to claim 7,
**characterised in that**
the guide walls (17) are supported on a floor (20) of the flap frame (12) by support pieces (19).

9. Fresh air supply device according to one of claims 1 to 8,
**characterised in that**
each flap frame (12) of each flap (5) comprises a through-opening (21) having an uncontrolled flow cross-section (22), which is arranged parallel to the flow cross-section (10) controlled by the respective flap (5) of the same cylinder.

10. Fresh air supply device according to one of claims 1 to 9,
**characterised in that**
on the side (23) thereof facing the cylinder head (3), the housing (2) comprises at least one step (24) along an inner wall (18) of the housing (2), into which an edge (25) of the respective flap frame (12) projects, such that through an attachment of the housing (2) on the cylinder head (3) the respective flap frame (12) is also secured on the cylinder head (3).

11. Fresh air supply device according to claim 10,
**characterised in that**
the edge (25) of each flap frame (12) projects locally at a plurality of dividing points (26) along the edge (25), or globally in the direction of the cylinder head (3) over the side (23) of the housing (2) facing the cylinder head (3).

12. Fresh air supply device according to one of claims 1 to 11,
**characterised in that**
the housing (2) for each flap frame (12) comprises at least one positioning element (27) for orientating each flap frame (12) parallel to the axis of rotation (8) relative to the housing (2), which is arranged on an inner wall (18) of the housing (2).

13. Fresh air supply device according to claim 12,
**characterised in that**
each flap frame (12) comprises at least one mating positioning element (28) that is designed to be complementary to the respective positioning element (27) and which engages with the respective positioning element (27) in order to orientate the respective flap frame (12) relative to the housing (2).

## Revendications

1. Dispositif d'admission d'air frais pour un moteur à combustion interne, comprenant:
- un boîtier (2) qui est préparé pour le montage sur une tête de cylindre (3) du moteur à combustion interne,
- un agencement de clapets (4) aménagé dans le boîtier (2), qui présente des clapets (5) destinés aux cylindres du moteur à combustion interne pour commander un courant d'air frais vers chaque cylindre respectif,
- dans lequel l'agencement de clapets (4) comprend une tige de réglage commune (6) qui est reliée de manière solidaire en rotation aux clapets (5) et qui est montée à rotation dans des paliers (7) de l'agencement de clapets (4) autour de l'axe de rotation (8),
- dans lequel l'agencement de clapets (4) présente par clapet (5) un rebord (9) qui enserre une section transversale d'écoulement (10) qui peut être commandée par le clapet respectif (5),
- dans lequel, sur le rebord respectif (9), des deux côtés du clapet associé (5), deux de ces paliers (7) se font face l'un l'autre,
**caractérisé en ce que** :
- l'agencement de clapets (4) présente un cadre de clapets (12) séparé du boîtier (2), qui présente les paliers (7) et les rebords (9) et sur lequel la tige de réglage (6) est montée avec les clapets (5) et qui est inséré dans le boîtier (2) sur un côté (23) tourné vers la tête de cylindre (3),
- le rebord respectif (9) et les deux paliers associés (7) sont scindés dans un plan de séparation (11) contenant l'axe de rotation (8) en sorte qu'une première moitié de rebord (9') soit mobile conjointement avec deux premières moitiés de palier (7') pour le montage de l'agencement de clapets (4) par rapport au cadre de clapets (12) qui comprend une seconde moitié de rebord (9") et deux secondes moitiés de palier (7").

2. Dispositif d'admission d'air frais selon la revendication 1,
**caractérisé en ce que**,
dans la zone du clapet respectif (5), la première moitié de rebord (9') et les deux premières moitiés de palier (7') forment une première unité (13'), dans lequel le cadre de clapets associé (12) forme une seconde unité (13") avec la seconde moitié de rebord (9") et les deux secondes moitiés de palier (7").

3. Dispositif d'admission d'air frais selon la revendication 2,
**caractérisé en ce que** :
la première unité (13') est reliée via au moins une charnière à film (14) à la seconde unité (13"), qui définit un axe de pivotement (15) autour duquel la première unité (13') peut pivoter par rapport à la seconde unité (13") pour le montage de l'agencement de clapets (4).

4. Dispositif d'admission d'air frais selon la revendication 2 ou 3,
**caractérisé en ce que** :
la première unité respective (13') est fixée à la seconde unité respective (13") via des moyens d'encliquetage (16).

5. Dispositif d'admission d'air frais selon la revendication 4,
**caractérisé en ce que** :
les moyens d'encliquetage (16) sont formés d'un seul tenant sur les moitiés de palier (7', 7").

6. Dispositif d'admission d'air frais selon l'une quelconque des revendications 1 à 5, **caractérisé en ce que** :
l'agencement de clapets (4) présente pour chaque clapet (5) un cadre de clapet séparé (12).

7. Dispositif d'admission d'air frais selon l'une quelconque des revendications 1 à 6, **caractérisé en ce que** :
le cadre de clapet respectif (12) présente deux parois de guidage (17) en regard l'une de l'autre des deux côtés du plan de séparation (11), lesquelles parois s'appuient sur une paroi interne (18) du boîtier (2) perpendiculairement au plan de séparation (11).

8. Dispositif d'admission d'air frais selon la revendication 7,
**caractérisé en ce que** :
les parois de guidage (17) s'appuient sur un fond (20) du cadre de clapet (12) via des étais (19).

9. Dispositif d'admission d'air frais selon l'une quelconque des revendications 1 à 8, **caractérisé en ce que** :
le cadre de clapet respectif (12) présente par clapet (5) une ouverture de passage (21) qui possède une section transversale d'écoulement non commandée (22) qui est affectée au même cylindre parallèlement à la section transversale d'écoulement (10) commandée par le clapet respectif (5).

10. Dispositif d'admission d'air frais selon l'une quelconque des revendications 1 à 9, **caractérisé en ce que** :
le boîtier (2) présente sur son côté (23) tourné vers la tête de cylindre (3) le long d'une paroi interne (18) du boîtier (2) au moins un gradin (24) dans lequel fait saillie un bord (25) du cadre de clapet respectif (12) de sorte que, par fixation du boîtier (2) à la tête de cylindre (3), le cadre de clapet respectif (12) soit également fixé sur la tête de cylindre (3).

11. Dispositif d'admission d'air frais selon la revendication 10,
**caractérisé en ce que** :
le bord (25) du cadre de clapet respectif (12) fait saille localement en plusieurs points (26) distribués le long du bord (25) ou globalement dans la direction de la tête de cylindre (3) par-dessus le côté (23) du boîtier (2) tourné vers la tête de cylindre (3).

12. Dispositif d'admission d'air frais selon l'une quelconque des revendications 1 à 11, **caractérisé en ce que** :
le boîtier (2) présente pour le cadre de clapet respectif (12) au moins un élément de positionnement (27) pour orienter le cadre de clapet respectif (12) parallèlement à l'axe de rotation (8) par rapport au boîtier (2), lequel élément est agencé sur une paroi interne (18) du boîtier (2).

13. Dispositif d'admission d'air frais selon la revendication 12,
**caractérisé en ce que** :
le cadre de clapet respectif (12) présente au moins un élément de contre-positionnement (28) qui est conçu de manière complémentaire à l'élément de positionnement respectif (27) et qui coopère avec l'élément de positionnement respectif (27) pour orienter le cadre de clapet respectif (12) par rapport au boîtier (2).
